# EUROPÄISCHE PATENTSCHRIFT

(11) **EP 3 667 128 B1**
(45) Veröffentlichungstag und Bekanntmachung des Hinweises auf die Patenterteilung: **06.11.2024**
(21) Anmeldenummer: 19158621.3
(22) Anmeldetag: 21.02.2019
(51) Int. Cl.: F16H 63/34, F16H 57/032, F16H 63/38, B29C 65/64

(54) **PARKSPERRE ZUM FESTSTELLEN EINES GETRIEBES SOWIE VERFAHREN ZUR HERSTELLUNG EINER PARKSPERRE**
PARKING BRAKE FOR FIXING GEARBOX AND METHOD FOR PRODUCING A PARKING BRAKE
FREIN DE STATIONNEMENT PERMETTANT D'ARRÊTER UNE BOÎTE DE VITESSES AINSI QUE PROCÉDÉ DE FABRICATION D'UN FREIN DE STATIONNEMENT

(30) Priorität: 13.12.2018 DE 102018132182
(43) Veröffentlichungstag der Anmeldung: 17.06.2020
(73) Patentinhaber: Kendrion (Villingen) GmbH, 78048 Villingen-Schwenningen (DE)
(72) Erfinder: Kammerer, Andreas, 78052 Obereschach (DE); Schulz, Florian, 78086 Brigachtal (DE); Hermann, Rolf, 78126 Königsfeld (DE)
(74) Vertreter: Westphal, Mussgnug & Partner Patentanwälte mbB

(56) Entgegenhaltungen:
- WO-A1-02/10619
- DE-A1- 102005 013 661
- DE-A1- 4 332 948
- US-A1- 2016 061 325
- US-A1- 2018 224 022

## Beschreibung

Die vorliegende Erfindung betrifft eine Parksperre zum Feststellen eines Getriebes, insbesondere zum Feststellen eines automatischen Getriebes eines Kraftfahrzeugs mit den Merkmalen des Patentanspruchs 1.

Parksperren sind aus dem Stand der Technik in unterschiedlichen Ausgestaltungen vorbekannt und dienen üblicherweise der Betätigung einer mechanisch wirkenden Sperreinrichtung, durch die das Getriebe eines Kraftfahrzeuges, insbesondere das automatische Getriebe eines Kraftfahrzeuges blockiert werden kann. Hierzu kann die Parksperre in eine das Getriebe freigebende erste Position und eine das Getriebe sperrende zweite Position zugestellt werden, in der beispielsweise eine Sperrklinke oder ein Bolzen in ein Sperrrad des automatischen Getriebes greift und somit das automatische Getriebe in einer Parkposition mechanisch blockiert.

Zur Betätigung der Parksperre werden in dem Stand der Technik unterschiedliche elektro-hydraulische Parksperren vorgeschlagen, welche sich dadurch auszeichnen, dass die Parksperre einerseits, beispielsweise mittels eines Federspeichers, vorgespannt ist und die Parksperre mittels eines hydraulisch betätigten Zylinders entsperrt werden kann, wobei eine Verriegelungseinrichtung vorgesehen ist, durch welche ein ungewolltes Betätigen der Parksperre verhindert ist.

Weiteren Stand der Technik bilden die WO 02 10619 A1, welche eine Parksperre mit den Merkmalen des Oberbegriffs des Anspruchs 1 zeigt, die DE 43 32 948 A1. die DE 10 2005 013 661 A1 sowie die US 2016/061 325 A1.

Als nachteilig an dem Stand der Technik hat sich herausgestellt, dass die aus dem Stand der Technik bekannten Parksperren eine aufwändige Konstruktion aufweisen, und zur Betätigung einerseits einen hohen hydraulischen Druck und andererseits einen hohen Strom benötigen. Dadurch weisen die aus dem Stand der Technik bekannten Parksperren neben einem erheblichen Gewicht auch eine nicht zu vernachlässigende Baugröße auf, welche im Getriebe vorgesehen werden muss und sind darüber hinaus sowohl in der Herstellung als auch im Betrieb unwirtschaftlich.

Hier setzt die vorliegende Erfindung an.

Es ist daher die Aufgabe der vorliegenden Erfindung, eine verbesserte Parksperre mit einer geringeren Baugröße und einem niedrigeren Gewicht vorzuschlagen, welche besonders energieeffizient und zuverlässig das Sperren eines Getriebes, insbesondere eines automatischen Getriebes eines Kraftfahrzeugs ermöglicht und das Einsparen von Kosten in dem Herstellungsprozess bei gleichzeitig einfachen und reproduzierbaren Prozessen ermöglicht. Insbesondere soll der Herstellungsprozess durch ein neuartiges Herstellungsverfahren Kosteneinsparungen ermöglichen.

Diese Aufgaben wird durch eine Parksperre mit den Merkmalen des Patentanspruchs 1 gelöst.

Weitere vorteilhafte Ausgestaltungen der Erfindung werden in den Unteransprüchen angegeben.

Nach Maßgabe der Erfindung ist es vorteilhaft, wenn das Aktorgehäuse eine Stößelhülse umfasst, und das Kolbengehäuse mindestens die Stößelhülse des Gehäuses umgreift und wenn das Aktorgehäuse an der Verbindungsstelle mit dem Kolbengehäuse mit einer Ultraschallschweißverbindung verbunden ist. Hierzu weist besonders bevorzugt das Aktorgehäuse einen Flansch mit einem im wesentlichen zylinderförmigen Absatz auf, wobei der Absatz an den Innendurchmesser des hohlzylindrisch ausgebildeten Kolbengehäuses angepasst ist, und das Kolbengehäuse über den Absatz gegen den Flansch aufgesetzt bzw. aufgeschoben werden kann und in dieser Position mit dem Aktorgehäuse durch Ultraschallverschweißen verbunden wird. Insbesondere ist weiterhin besonders bevorzugt, wenn der Absatz eine Oberflächenvergrößerung aufweist, die in einer bevorzugten Weiterbildung der Erfindung als eine Riffelung, Kreuzriffelung, mindestens eine Hinterschneidung oder dergleichen ausgebildet sein kann, durch die die Festigkeit der Metall-Kunststoff-Verbindung zwischen dem Aktorgehäuse und dem Kolbengehäuse vergrößert werden kann.

Das Kolbengehäuse wird bevorzugt auf das Aktorgehäuse in einem Urformverfahren, insbesondere durch Spritzgießen aufgeformt. Besonders bevorzugt umfasst das Aktorgehäuse einen Flansch und weiterhin bevorzugt einen an den Flansch angearbeiteten oder angeformten im Wesentlichen zylinderförmigen Absatz. Der Absatz ist an den im Wesentlichen konstanten Innendurchmesser des als hohlzylindrisch auszubildenden Kolbengehäuses angepasst, und das Kolbengehäuse kann auf den Absatz in einem Urformprozess z.B. mittels Spritzgießen aufgeformt bzw. aufgespritzt werden. Insbesondere ist weiterhin besonders bevorzugt, wenn der Absatz eine Oberflächenvergrößerung aufweist, zum Beispiel eine Riffelung, Kreuzriffelung, mindestens eine Hinterschneidung oder dergleichen, durch die die Metall-Kunststoff-Verbindung zwischen dem Aktorgehäuse und dem Kolbengehäuse eine besonders hohe Festigkeit erhält.

Das Aktorgehäuse ist in einer bevorzugten Ausgestaltung der vorliegenden Erfindung aus einem ersten Gehäuseteil und einem zweiten Gehäuseteil hergestellt, wobei das erste Gehäuseteil auf der von dem Kolbengehäuse abgewandten ersten Seite angeordnet ist und das zweite Gehäuseteil auf der dem Kolbengehäuse zugewandten zweiten Seite. Das erste Gehäuseteil und das zweite Gehäuseteil verschließen den elektromagnetischen Aktor und sind jeweils flussführende Bauteile, welche bevorzugt einstückig aus einem metallischen Werkstoff hergestellt sind.

Eine weitere vorteilhafte Ausgestaltung der vorliegende Erfindung sieht vor, dass der Kolben in der Längsachse mit der Druckfeder in der ersten Position oder in der zweiten Position vorgespannt gehalten ist. Besonders bevorzugt ist der Kolben durch die Druckfeder in einer das Getriebe sperrenden Position vorgespannt, so dass eine Entriegelung des Getriebes nur möglich ist, wenn das Medium mit einem ausreichenden Druck bereitgestellt wird bzw. wenn der Öldruckkreislauf des automatischen Getriebes einen ausreichenden Öldruck liefert. Der Kolben kann durch die Druckfeder in der das Getriebe sperrenden Position gehalten werden, wodurch ein Notöffnen der Parksperre durch ein manuelles Betätigen des Kolbens entgegen der Spannkraft der Druckfeder erfolgen kann. Hierzu kann eine entsprechende Hilfsvorrichtung an dem Kolben vorgesehen sein, die beispielsweise beim Ausfall des Druckkreislaufes bzw. einer Panne des Kraftfahrzeugs eine manuelle Entriegelung der Parksperre ermöglicht.

Darüber hinaus kann es weiterhin vorteilhaft sein, wenn der Deckel des Kolbengehäuses nach Art einer Muffenverbindung als Nippel auf das Kolbengehäuse gesetzt ist und/oder auf dem Kolbengehäuse mittels einer form- oder stoffschlüssigen Verbindung, insbesondere mittels Ultraschallschweißen, verbunden ist. Bevorzugt ist der Deckel des Kolbengehäuses aus dem gleichen Kunststoff-Werkstoff hergestellt, wie das Kolbengehäuse. Darüber hinaus ist es vorteilhaft, wenn ein Parksperrenstößel vorgesehen ist, der einenends in der Längsachse an dem Federschuh abgestützt ist und anderenends den Deckel des Kolbengehäuses in einer Durchgangsbohrung durchgreift. Besonders bevorzugt ist der Parksperrenstößel unmittelbar mit der Feder gekoppelt, wodurch der Parksperrenstößel mittels der Feder gegen den Federschuh abgestützt ist. In dieser bevorzugten Ausgestaltung der vorliegenden Erfindung ist die Feder in der Längsachse einenends an dem Parksperrenstößel und somit mittelbar an dem Kolben abgestützt und anderenends an dem Deckel des Gehäuses. Ein aus dem Deckel herausragendes freies Ende des Parksperrenstößels kann eine Sperrklinke oder einen Sperrbolzen aufweisen, um das Getriebe, insbesondere das automatische Getriebe eines Kraftfahrzeugs mechanisch zu sperren.

Auch hat es sich als vorteilhaft erwiesen, wenn die Verriegelungseinrichtung eine Ausnehmung in dem Aktorgehäuse umfasst und wenn in der Ausnehmung mindestens ein Sperrglied angeordnet ist. Das mindestens eine Sperrglied greift bevorzugt zum Feststellen des Kolbens in einer das Getriebe feststellenden ersten Position oder in einer das Getriebe freigegebenen zweiten Position in den Kolben bzw. die Rastkulisse des Kolbens. Besonders bevorzugt ist die Ausnehmung in eine Stößelhülse des Gehäuses eingearbeitet oder eingeformt, wobei das mindestens eine Sperrglied eine Rastkugel oder einen Raststift umfasst. Das mindestens eine Sperrglied ist eingerichtet, mit dem an dem Aktorstößel angeordneten Betätigungselement zusammenzuwirken und in die Rastaussparungen der Rastkulisse des Kolbens nach Art eines Kugelschnellverschlusses zu ragen, um die Position des Kolbens relativ zu dem Aktorgehäuse bzw. dessen Stö-ßelhülse festzulegen.

Nach Maßgabe einer weiteren vorteilhaften Ausgestaltung der vorliegenden Erfindung kann es vorteilhaft sein, wenn das Betätigungselement einen Spreizkonus umfasst, der eingerichtet ist, das mindestens eine Sperrelement zu betätigen. Der Spreizkonus verbindet zwei auf dem Betätigungselement ausgebildete Zylinderflächen mit unterschiedlichen Durchmessern, wobei ein erster kleiner Durchmesser dem mindestens einen Sperrglied erlaubt aus einer der Rastaussparungen der Rastkulisse zu gelangen und somit eine Bewegung des Kolbens freizugeben und ein zweiter größerer Durchmesser das mindestens eine Sperrglied in der jeweiligen Rastaussparung in der Rastkulisse formschlüssig hält, wodurch eine Bewegung des Kolbens blockiert bzw. festgelegt bzw. verhindert ist. Der Spreizkonus dient der Zustellung der Sperrglieder.

Besonders vorteilhaft kann es sein, wenn das Betätigungselement eine auf den Aktorstößel aufgesetzte Betätigungshülse umfasst, welche bevorzugt mit dem Spreizkonus ausgebildet ist. Die Betätigungshülse kann aus einem verschleißfesten Werkstoff hergestellt sein. Durch die zweikomponentige Ausgestaltung ist es möglich, den Aktorstößel und das Betätigungselement aus unterschiedlichen Werkstoffen herzustellen, wodurch eine gewichtsoptimierte und anwendungsoptimierte Werkstoffauswahl für die jeweiligen Komponenten möglich ist.

Eine weitere vorteilhafte Ausgestaltung der vorliegenden Erfindung sieht vor, dass der elektromagnetische Aktor einen Poldeckel umfasst. Der Poldeckel ist in der Längsachse auf der von dem Kolben abgewandten Seite des Aktorgehäuses angeordnet und ragt in der Längsachse in die bestrombare Spule. Auf der dem Anker zugewandten Seite weist der Poldeckel einen hülsenförmigen Abschnitt auf, der als Steuerkonus ausgebildet ist, wodurch die magnetische Charakteristik des elektromagnetischen Aktors verbessert ist. Der hülsenförmige Abschnitt mit dem Steuerkonus ist ausgebildet, den zylinderförmigen Anker zu umgreifen. Dadurch ist es möglich, den elektromagnetischen Aktor effizienter zu gestalten und kleiner zu dimensionieren, wodurch eine kleine Baugröße und weitere Gewichtsvorteile erzielt werden.

Auch ist es vorteilhaft, wenn der Aktorstößel aus einem nicht-magnetischen Werkstoff hergestellt ist und den Poldeckel in der Längsachse in einer Durchgangsöffnung durchdringt. Der Aktorstößel kann bevorzugt von der von dem Poldeckel abgewandten zweiten Seite des elektromagnetischen Aktors durch das Ankergehäuse eingesetzt werden. Hierzu wird in einem Verfahrensschritt zunächst die Betätigungshülse auf den Aktorstößel aufgesetzt und anschließend eine Rückstellfeder. Die Rückstellfeder spannt die Verriegelungseinrichtung bevorzugt in eine sperrende Position vor, wobei bevorzugt die Rückstellfeder zwischen dem Ankergehäuse und der Betätigungshülse angeordnet ist, und die Betätigungshülse gegen das Aktorgehäuse vorspannt. Anschließend wird der Aktorstößel in die Stößelhülse des Ankergehäuses eingesetzt, der Anker mit dem Aktorstößel verbunden und der Aktorstößel soweit in den Polkern und das Ankergehäuse eingeschoben, bis er diese vollständig durchdringt. Auf der ersten Seite des elektromagnetischen Aktors kann der Aktorstößel mittels einer Sicherungseinrichtung gehalten werden. Durch diesen Aufbau kann die Parksperre ausschließlich von der zweiten Seite des elektromagnetischen Aktors in einer einzigen Spannung an einer Haltevorrichtung montiert werden.

Es hat sich weiterhin aus besonders vorteilhaft erwiesen, wenn das Kolbengehäuse in einem Spritzgussverfahren aus einem Kunststoff hergestellt ist. Auch können der Kolben und der Deckel des Kolbengehäuses in einem Spritzgussverfahren aus einem Kunststoff hergestellt werden. Das Kolbengehäuse, aber auch der Deckel oder der Kolben können somit kostengünstig in einer großen Stückzahl hergestellt werden, wobei gleichzeitig eine erhebliche Gewichtsreduzierung gegenüber derzeit bekannten Parksperren, die aus metallischen Werkstoffen hergestellt werden, erreicht werden kann.

Nachfolgend wird anhand der begleitenden Zeichnung ein erfindungsgemäßes Ausführungsbeispiel der Parksperre im Detail erläutert. Es zeigen:

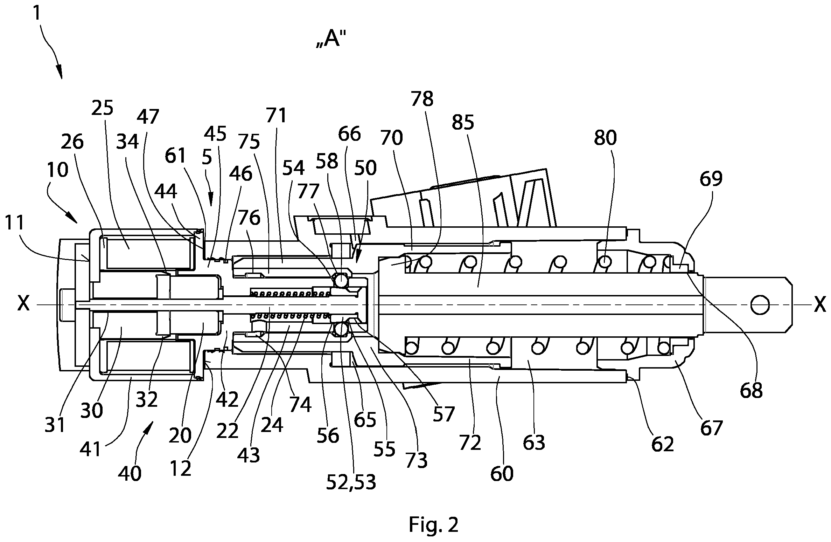

- Figur 2: eine erfindungsgemäße Parksperre mit einem elektromagnetischen Aktor, dessen Aktorgehäuse mit einem Kolbengehäuse mittels einer Metall-Kunststoff-Verbindung verbunden ist, wobei in dem Kolbengehäuse ein in der Längsachse beweglicher Kolben zum mechanischen Sperren eines Getriebes in einer ersten Position relativ zu dem Aktorgehäuse angeordnet ist, und

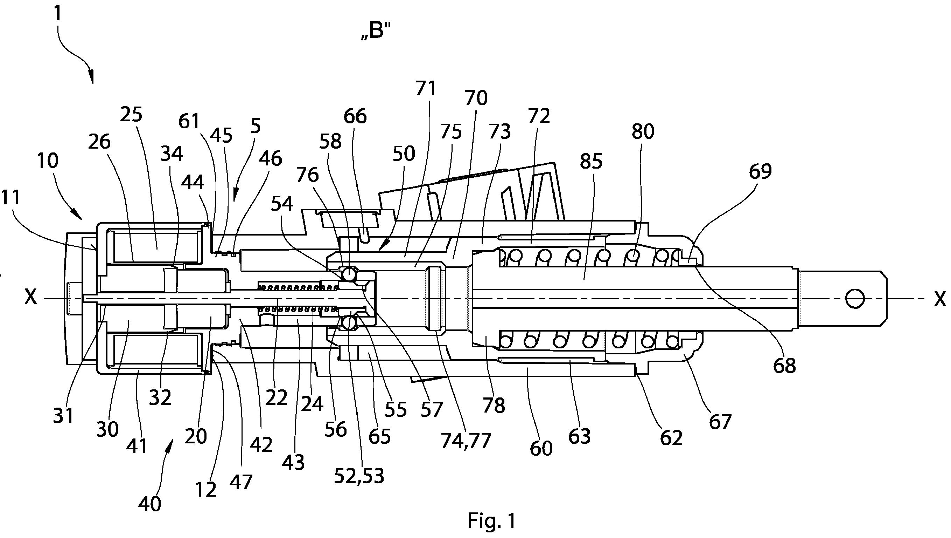

- Figur 1: die erfindungsgemäße Parksperre gemäß Figur 2, wobei der Kolben durch eine durch den elektromagnetischen Aktor betätigbare Verriegelungseinrichtung in einer zweiten Position relativ zu dem Aktorgehäuse festgelegt ist.

Figuren 1 und 2 zeigen eine erfindungsgemäße Parksperre 1 mit einem elektromagnetischen Aktor 10 und einem in einem Kolbengehäuse 60 angeordneten Kolben 70, der in dem Kolbengehäuse 60 entlang einer Längsachse X-X beweglich angeordnet ist.

Der Kolben 70 der Parksperre 1 kann entlang einer Längsachse X-X zwischen einer ersten Position A und einer zweiten Position B verschoben werden, um ein nicht dargestelltes Getriebe, insbesondere ein automatisches Getriebe eines Kraftfahrzeugs, mechanisch zu sperren. In Figur 2 ist der Kolben 70 in der ersten Position A angeordnet, während dessen in der Darstellung gemäß Figur 1 der Kolben 70 in der zweiten Position B angeordnet ist. Die erste Position A des Kolbens 70 kann der das Getriebe sperrenden Stellung des Kolbens 70 entsprechen und die zweite Position B kann einer das Getriebe freigegebenden Position des Kolbens 70 entsprechen oder umgekehrt.

Der elektromagnetische Aktor 10 ist auf der Längsachse X-X angeordnet und weist eine erste Seite 11 und eine zweite Seite 12 auf, wobei die zweite Seite 12 die dem Kolben 70 und dem Kolbengehäuse 60 zugewandte ist und die erste Seite 11 das freie Ende des elektromagnetischen Aktors 10 bildet.

Der elektromagnetische Aktor 10 umfasst eine auf einem Spulenträger 26 angeordnete bestrombare Spule 25, einen Anker 20, einen Aktorstößel 22, eine Rückstellfeder 24, einen Poldeckel 30 und ein Aktorgehäuse 40.

Der elektromagnetische Aktor 10 ist nach Art eines Einfachhubmagnets ausgebildet, der durch eine elektromagnetische Kraftwirkung der bestromten Spule 25 eine lineare Bewegung des Ankers 20 und eines mit dem Anker 20 verbundenen Aktorstößels 22 in der Längsachsachse X-X von einer Hubanfangslage - welche in den Figuren 1 und 2 dargestellt ist - in die Hubendlage (nicht dargestellt) ausführt. Die Rückstellung erfolgt durch die Federkraft der Rückstellfeder 24.

Das Aktorgehäuse 40 des elektromagnetischen Aktors 10 umfasst ein erstes Gehäuseteil 41 und ein zweites Gehäuseteil 42, wobei das erste Gehäuseteil 41 die erste Seite 11, also das freie Ende des elektromagnetischen Aktors 10 verschließt und das zweite Gehäuseteil 42 auf der dem Kolbengehäuse 60 zugewandten Seite des elektromagnetischen Aktors 10 angeordnet ist. Das erste Gehäuseteil 41 und das zweite Gehäuseteil 42 sind jeweils einstückig aus einem magnetischen und metallischen Werkstoff hergestellt und dienen der Führung des magnetischen Flusses, der aus einer Bestromung der Spule 25 resultiert.

Das zweite Gehäuseteil 42 umfasst weiterhin einen Flansch 44, einen eine Zylindermantelfläche formenden Absatz 45 und eine von der zweiten Seite 12 abstehende Stößelhülse 43.

Der Aktorstößel 22 ist mit dem Anker 20 verbunden und ist einerseits auf der ersten Seite 11 des elektromagnetischen Aktors 10 in einer Durchgangsbohrung 31 in dem Poldeckel 30 gelagert und anderenends in dem zweiten Gehäuseteil 42 bzw. der an das zweite Gehäuseteil 42 angeformten Stößelhülse 43 gelagert.

Bei einer Bestromung der Spule 25 wird der Anker 20 zusammen mit dem Aktorstößel 22 von der Hubanfangslage entlang der Längsachse X-X gegen die Kraft der Rückstellfeder 24 bewegt. Die Rückstellfeder 24 ist einenends in dem Aktorgehäuse 40 bzw. in der Stößelhülse 43 des zweiten Gehäuseteils 42 abgestützt und anderenends an einem auf der zweiten Seite 12 angeordneten freien Ende, das mit einem Flansch versehen ist.

Der Anker 20 ist sowohl in der Hubanfangslage als auch in der Hubendlage in dem zweiten Gehäuseteil 42 für einen Flussübergang gehalten, wobei in der Hubanfangslage der Poldeckel 30 und der Anker 20 beabstandet sind. In der Hubendlage wird der Luftspalt zwischen dem Anker 20 und dem Poldeckel 30 geschlossen, wobei auf der dem Anker 20 zugewandten Seite des Poldeckels 30 ein hülsenförmiger Abschnitt 32 ausgebildet ist, der eingerichtet ist, den Anker 20 in der Hubendlage zu umgreifen.

Es kann vorteilhaft sein, dass der hülsenförmige Abschnitt 32 als Steuerkonus 34 ausgebildet ist. Das freie Ende des hülsenförmigen Abschnitts 32 kann annähernd in einer Ebene senkrecht zu der Längsachse X-X mit dem dem Poldeckel 30 zugewandten Ende des Ankers 20 angeordnet sein. Weiterhin ist das freie Ende des hülsenförmige Abschnitts 32 beabstandet zu dem zweiten Gehäuseteil 42 angeordnet.

Der elektromagnetische Aktor 10 ist eingerichtet, eine Verriegelungseinrichtung 50 zu betätigen. Die Verriegelungseinrichtung 50 ist auf der dem Kolben 70 zugewandten zweiten Seite 12 des elektromagnetischen Aktors 10 angeordnet und umfasst ein Betätigungselement 52, welches eingerichtet ist, mindestens ein Sperrglied 58 zum Festlegen oder Sperren des Kolbens in der ersten Position A oder der zweiten Position B - wie nachfolgend noch im Detail erläutert wird - zuzustellen.

Das Kolbengehäuse 60 ist aus einem Kunststoff hergestellt und weist eine koaxial zu der Längsachse X-X ausgebildete Durchgangsöffnung 63 auf, die sich zwischen einer ersten Seite 61, welche dem elektromagnetische Aktor 10 zugewandt ist, und einer zweiten Seite 62 erstreckt. In der Durchgangsöffnung 63 ist der Kolben 70 in der Längsachse X-X beweglich angeordnet.

Das Kolbengehäuse 60 ist in einer Verbindungsstelle 5 mit dem Aktorgehäuse 40 fest verbunden, wobei das Kolbengehäuse 60 in dem dargestellten bevorzugten Ausführungsbeispiel über die Zylindermantelfläche des Absatzes 45 auf das erste Gehäuseteil 41 aufgesteckt wird, bis die erste Seite 61 des Kolbengehäuses 60 an der Stirnfläche des Flansches 44 anliegt. Zum Toleranzausgleich kann zwischen der Stirnfläche des Flansches 44 und der ersten Seite 61 des Kolbengehäuses 60 ein Spalt 47 ausgebildet sein. Anschließend wird eine Metall-Kunststoff-Verbindung zwischen dem Aktorgehäuse 40 und dem Kolbengehäuse 60 hergestellt, wobei besonders bevorzugt die Metall-Kunststoff-Verbindung durch ein Ultraschweißverfahren erzeugt wird. Alternativ kann das Kolbengehäuse 60 direkt auf das Aktorgehäuse 40 in einem Urformverfahren, insbesondere Spritzgießen, aufgeformt werden.

Um der Metall-Kunststoff-Verbindung eine besonders gute Festigkeit zu verleihen, kann sowohl die Stirnseite des Flanschs 44 als auch die Zylindermantelfläche des Absatzes 45 mit einer Oberflächenvergrößerung, beispielsweise einer Riffelung oder mindestens einer Hinterschneidung 46 versehen werden, wodurch insbesondere hohe Axialkräfte entlang der Längsachse X-X über die Metall-Kunststoff-Verbindung übertragen werden können.

Der Kolben 70 ist einstückig aus im Wesentlichen zwei rohrförmigen Abschnitten ausgebildet und kann aus einem Kunststoff, vorzugsweise in einem Spritzgussverfahren hergestellt werden. Der erste rohrförmige Abschnitt 71 und der zweite rohrförmige Abschnitt 72 sind in einem Übergangsbereich 73 miteinander verbunden.

Der erste Abschnitt 71 schließt zusammen mit dem Übergangsbereich 73 und dem Kolbengehäuse 60 einen Druckraum 65 ein, welcher mittels Dichtungen flüssigkeits- und luftdicht verschlossen werden kann. Weiterhin greift der erste Abschnitt 71 in einen zwischen der Stößelhülse 43 und dem Kolbengehäuse 60 eingeschlossenen hohlzylindrisch Hohlraum, so dass der erste Abschnitt 71 linear geführt auf der Stößelhülse 43 einerseits und andererseits an dem Kolbengehäuse 60 geführt ist.

Das Kolbengehäuse 60 kann mindestens eine Steueröffnung 66 aufweisen, durch welches ein Medium in den Druckraum 65 eingebracht werden kann, um den Kolben 70 entgegen der Federkraft einer Druckfeder 80 von der ersten Position A in die zweite Position B entlang der Längsachse X-X zu verschieben.

Der Kolben 70 ist im ersten rohrförmigen Abschnitt 71 auf der Stößelhülse 43 geführt, wobei der erste rohrförmige Abschnitt 71 eine Gleitbuchse 75 aufweist, durch welche der Kolben 70 auf der Stößelhülse 43 linear gleitgelagert ist. Die Gleitbuchse 75 kann aus einem metallischen Werkstoff hergestellt sein und besonders bevorzugt ist der Kolben 70 auf die Gleitbuchse 75 aufgespritzt, wodurch diese formschlüssig auf der inneren Mantelfläche des ersten rohrförmigen Abschnitts 71 des Kolbens 70 gehalten ist. Die Gleitbuchse 75 kann sich ganz oder nur teilweise über den ersten rohrförmigen Abschnitt 71 des Kolbens 70 erstrecken.

Die Gleitbuchse 75 umfasst eine erste Aussparung 76 und eine zweite Aussparung 77, welche in der Längsachse X-X zueinander beabstandet sind und eine Rastkulisse 74 bilden. Der Abstand zwischen der ersten Aussparung 76 und der zweiten Aussparung 77 entspricht dem Hub des Kolbens 70 zwischen der ersten Position A und der zweiten Position B.

Auf der von dem ersten rohrförmigen Abschnitt 71 abgewandten Seite des Übergangsbereichs 73 ist innerhalb des zweiten rohrförmigen Abschnitts 72 ein Federschuh 78 ausgebildet. An dem Federschuh 78 ist ein Parksperrenstößel 85 abgestützt, wobei die Druckfeder 80 den Parksperrenstößel 85 gegen den Federschuh 78 in der Längsachse X-X gedrückt hält.

Die zweite Seite 62 des Kolbengehäuses 60 ist mittels eines Deckels 67 verschlossen, der eine Durchgangsöffnung 68 aufweist, durch die der Parksperrenstößel 85 zum Getriebe geführt werden kann. Die Druckfeder 80 kann mittels eines Federtellers 69 zwischen dem Parksperrenstößel bzw. dem Federschuh 78 und der Federteller 69 bzw. dem Deckel 67 vorgespannt gehalten werden, so dass bei einer Druckbeaufschlagung des Druckraums 65 der Kolben 70 in der Längsachse X-X entgegen der Federkraft der Druckfeder 80 aus der ersten Position A in die zweite Position B verschoben wird.

Die Verriegelungseinrichtung 50 legt den Kolben in der ersten Position A oder der zweiten Position B fest, wobei der elektromagnetische Aktor 10 die Verriegelungseinrichtung 50 mittels des Betätigungselements 52 an dem Aktorstößel 22 öffnen oder schließen kann.

Hierzu ist das mindestens eine Sperrglied 58 als Rastkugel ausgebildet und in einer Ausnehmung 54 der Stößelhülse bzw. des zweiten Gehäuseteils 42 gehalten. Das mindestens eine Sperrglied 58 kann in Abhängigkeit von der ersten Position A oder der zweiten Position B des Kolben 70 in die erste Aussparung 76 oder in die zweite Aussparung 77 der Rastkulisse 74 eingreifen und dadurch die relative Position des Kolbens 70 zu dem Aktorgehäuse 40 festlegen.

Das Betätigungselement 52 kann fest auf dem Aktorstößel 22 angeordnet sein und umfasst eine erste Zylindermantelfläche 56, einen Spreizkonus 55 und eine zweite Zylindermantelfläche 57. Der Spreizkonus 55 verbindet die erste Zylindermantelfläche 56 mit der zweiten Zylindermantelfläche 57. Der Durchmesser der ersten Zylindermantelfläche 56 und der zweiten Zylindermantelfläche 57 sind unterschiedlich groß bemessen. Wenn die erste Zylindermantelfläche 56 in Wirkverbindung mit den Sperrgliedern 58 steht, greifen die Sperrglieder 58 in die jeweilige Aussparung 76, 77. Wenn dagegen die zweite Zylindermantelfläche 56 in Wirkverbindung mit den Sperrgliedern 58 steht, können die Sperrglieder die jeweilige Aussparung 76, 77 verlassen und geben eine Bewegung des Kolbens 70 in der Längsachse X-X frei.

Das Betätigungselement 52 kann als Betätigungshülse 53 auf den Aktorstößel 22 aufgesetzt sein und mittels der Rückstellfeder 24 gegen den Flansch auf der zweiten Seite des Aktorstößels 22 gehalten werden.

Die vorliegende Parksperre 1 soll in einem effizienten und einfachen Herstellungsverfahren gewichtsoptimiert hergestellt werden können. Das erfindungsgemäße Herstellungsverfahren sieht zunächst vor, dass der elektromagnetische Aktor 10 bereitgestellt wird. Hierzu werden zunächst die auf der ersten Seite 11 des elektromagnetischen Aktors 10 angeordneten Elemente montiert, nämlich das erste Gehäuseteil 41, der Spulenträger 26 mit der Spule 25 sowie der in dem ersten Gehäuseteil 41 gehaltene Poldeckel 30. Anschließend kann diese Einheit in eine Haltevorrichtung eingesetzt werden, so dass die gesamte weitere Montage der Parksperre 1 von der zweiten Seite 12 des elektromagnetischen Aktors 10 erfolgen kann. Hierzu wird zunächst eine zweite Einheit, welche aus dem zweiten Gehäuseteil 42, dem Anker 20, dem Aktorstößel 22, der Rückstellfeder 24 und dem Betätigungselement 52 besteht, montiert, wobei erfindungswesentlich ist, dass zur Ermöglichung dieser Montageweise der Aktorstößel 22 einen sich von der zweiten Seite 12 zur ersten Seite 11 stetig verjüngenden Durchmesser aufweist. Der Aktorstößel 22 kann folglich von der zweiten Seite 12 aus zusammen mit dem zweiten Gehäuseteil 42 auf die erste Einheit aufgesetzt werden, wobei der Aktorstößel 22 den Poldeckel 30 durchdringt und auf der ersten Seite 11 durch eine Sicherungseinrichtung verlustsicher gehalten werden kann.

Anschließend kann das Kolbengehäuse 60 an dem Aktorgehäuse 40 mittels der Metall-Kunststoff-Verbindung befestigt werden, wobei entweder das Kolbengehäuse 60 zuvor in einem Herstellungsverfahren urgeformt ist und anschließend mittels des Ultraschallschweißverfahrens mit dem Aktorgehäuse 40 bzw. dem zweiten Gehäuseteil 42 bzw. dessen Flansch 44 verbunden wird. Alternativ kann das Kolbengehäuse 60 auf das Aktorgehäuse 40 aufgeformt werden, insbesondere durch ein Spritzgussverfahren auf das Aktorgehäuse 40 aufgespritzt werden. Anschließend werden der Kolben 70 zusammen mit dem Parksperrenstößel und der Druckfeder 80 in die Durchgangsöffnung 63 des Kolbengehäuses 60 von der zweiten Seite 62 eingesetzt und die Durchgangsöffnung 63 auf der zweiten Seite 62 des Kolbengehäuses mittels des Deckels 67 verschlossen. Der Deckel 67 kann an dem Kolbengehäuse 60 mittels einer Schraubverbindung verbunden werden. Besonders bevorzugt sind jedoch stoffschlüssige Verbindungen, welche unnötige Materialverdopplung vermeiden und leichtbaugerecht herzustellen sind.

### Bezugszeichenliste

- 1: Parksperre
- 5: Verbindungsstelle
- 10: Aktor
- 11: erste Seite
- 12: zweite Seite
- 20: Anker
- 22: Aktorstößel
- 24: Rückstellfeder
- 25: Spule
- 26: Spulenträger
- 30: Poldeckel
- 31: Durchgangsbohrung
- 32: hülsenförmiger Abschnitt
- 34: Steuerkonus
- 40: Aktorgehäuse
- 41: erstes Gehäuseteil
- 42: zweites Gehäuseteil
- 43: Stößelhülse
- 44: Flansch
- 45: Absatz
- 46: Hinterschneidung
- 47: Spalt
- 50: Verriegelungseinrichtung
- 52: Betätigungselement
- 53: Betätigungshülse
- 54: Ausnehmung
- 55: Spreizkonus
- 56: erste Zylindermantelfläche
- 57: zweite Zylindermantelfläche
- 58: Sperrglied
- 60: Kolbengehäuse
- 61: erste Seite
- 62: zweite Seite
- 63: Durchgangsöffnung
- 65: Druckraum
- 66: Steueröffnung
- 67: Deckel
- 68: Durchgangsöffnung
- 69: Federteller
- 70: Kolben
- 71: erster Abschnitt
- 72: zweiter Abschnitt
- 73: Übergangsbereich
- 74: Rastkulisse
- 75: Gleitbuchse
- 76: erste Aussparung
- 77: zweite Aussparung
- 78: Federschuh
- 80: Druckfeder
- 85: Parksperrenstößel

- A: erste Position
- B: zweite Position
- X-X: Längsachse

## Patentansprüche

1. Parksperre (1) zum Feststellen eines Getriebes, insbesondere eines Getriebes eines Kraftfahrzeugs, umfassend:
- einen Kolben (70) zum mechanischen Sperren des Getriebes,
- ein elektromagnetischer Aktor (10) zum Feststellen des Kolbens (70) in einer das Getriebe freigebenden ersten Position (A), mit einer in einem magnetischen Aktorgehäuse (40) angeordneten bestrombaren Spule (25), einem bei der Bestromung der Spule (25) beweglichen Anker (20) mit einem Aktorstößel (22), der in dem Aktorgehäuse (40) gelagert ist und ein Betätigungselement (52) zum Betätigen einer Verriegelungseinrichtung (50) aufweist, durch welches die erste Position (A) des Kolbens (70) relativ zu dem Aktorgehäuse (40) festgelegt ist,
- ein Kolbengehäuse (60) in dem der Kolben (70) entlang einer Längsachse (X-X) beweglich angeordnet ist, mit einer koaxial zu der Längsachse (X-X) ausgebildete Durchgangsöffnung (63) auf, die sich zwischen einer ersten Seite (61), welche dem elektromagnetische Aktor (10) zugewandt ist, und einer zweiten Seite (62) erstreckt,
- wobei der Kolben (70) mit dem Kolbengehäuse (60) einen Druckraum (65) umschließt,
- wobei das Kolbengehäuse (60) mindestens eine Steueröffnung (66) aufweist, durch welches ein Medium in den Druckraum (65) eingebracht werden kann,
- wobei das Kolbengehäuse (60) auf der dem Aktorgehäuse (40) abgewandten zweiten Seite (62) durch einen Deckel (67) verschlossen ist, dass der Kolben (70) auf der dem Deckel (67) zugewandten Seite einen Federschuh (78) aufweist, und
- wobei eine Druckfeder (80) in dem Kolbengehäuse (40) in der Längsachse (X-X) einenends an dem Federschuh (78) abgestützt ist,
**dadurch gekennzeichnet, dass**
- die Druckfeder (80) in dem Kolbengehäuse (40) in der Längsachse (X-X) anderenends an dem Deckel (67) des Kolbengehäuses (60) abgestützt ist,
- das Kolbengehäuse (60) aus einem Kunststoff hergestellt ist und in einer Verbindungsstelle (5) mit dem Aktorgehäuse (40) durch eine Metall-Kunststoff-Verbindung verbunden ist,
- der elektromagnetische Aktor (10) zum Feststellen des Kolbens (70) in einer das Getriebe sperrenden zweiten Position (B) ausgebildet ist,
- die zweite Position (B) des Kolbens (70) relativ zu dem Aktorgehäuse (40) durch das Betätigungselement (52) festgelegt ist,
- das Einbringen des Medium in den Druckraum (65) geeignet ist, um den Kolben (70) entgegen der Federkraft der Druckfeder (80) von der ersten Position A in die zweite Position B entlang der Längsachse X-X zu verschieben,
- der Kolben (70) eine Rastkulisse (74) aufweist, die auf dem Aktorgehäuse (40) geführt gelagert gehalten ist, und
- die Rastkulisse (74) aus einer in den Kolben (70) eingesetzten Gleitbuchse (75) ausgebildet ist.

2. Parksperre (1) nach Anspruch 1,
**dadurch gekennzeichnet, dass**
das Aktorgehäuse (40) und das Kolbengehäuse (60) an der Verbindungsstelle (5) mit einer Ultraschallschweißverbindung verbunden ist.

3. Parksperre (1) nach Anspruch 1,
**dadurch gekennzeichnet, dass**
das Kolbengehäuse (60) zur Bildung der Metall-Kunststoff-Verbindung in einem Spritzgussverfahren auf das Aktorgehäuse (40) aufgespritzt ist.

4. Parksperre (1) nach einem der vorgenannten Ansprüche,
**dadurch gekennzeichnet, dass**
der Kolben (70) in der Längsachse (X-X) mit der Druckfeder (80) in einer das Getriebe freigebenden ersten Position (A) oder einer das Getriebe sperrenden zweiten Position (B) vorgespannt ist.

5. Parksperre (1) nach einem der vorgenannten Ansprüche,
**dadurch gekennzeichnet, dass**
ein Parksperrenstößel (85) vorgesehen ist, der in der Längsachse (X-X) an dem Federschuh (78) abgestützt ist und den Deckel (67) des Kolbengehäuses (60) durchgreift.

6. Parksperre (1) nach einem der vorgenannten Ansprüche,
**dadurch gekennzeichnet, dass**
die Verriegelungseinrichtung (50) mindestens eine Ausnehmung (54) in dem Aktorgehäuse (40) umfasst, und dass in der Ausnehmung (54) mindestens ein Sperrglied (58) angeordnet ist, das zum Feststellen des Kolbens (70) in einer ersten Position (A) und in einer zweiten Position (B) in den Kolben (70) greift.

7. Parksperre (1) nach Anspruch 6,
**dadurch gekennzeichnet, dass**
das mindestens eine Sperrglied (58) eine Rastkugel oder ein Raststift ist.

8. Parksperre (1) nach Anspruch 6 oder 7,
**dadurch gekennzeichnet, dass**
das Betätigungselement (52) einen Spreizkonus (55) umfasst, der eingerichtet ist die Sperrglieder (58) zu betätigen.

9. Parksperre (1) nach einem der vorgenannten Ansprüche,
**dadurch gekennzeichnet, dass**
das Betätigungselement (52) aus einer auf den Aktorstö-ßel (22) aufgesetzten Betätigungshülse (53) ausgebildet ist.

10. Parksperre (1) nach einem der vorgenannten Ansprüche,
**dadurch gekennzeichnet, dass**
der elektromagnetische Aktor (10) einen Poldeckel (30) umfasst, der in der Längsachse (X-X) auf der dem Kolben (70) abgewandten Seite in die bestrombare Spule (25) ragt und auf der dem Anker (20) zugewandten Seite einen hülsenförmigen Abschnitt (32) umfasst, der als Steuerkonus (34) ausgebildet ist.

11. Parksperre (1) nach einem der vorgenannten Ansprüche,
**dadurch gekennzeichnet, dass**
der Aktorstößel (22) aus einem nicht-magnetischen Werkstoff hergestellt ist und den Poldeckel (30) in der Längsachse (X-X) durchdringt.

12. Parksperre (1) nach einem der vorgenannten Ansprüche,
**dadurch gekennzeichnet, dass**
das Kolbengehäuse (60) in einem Spritzgussverfahren hergestellt ist.

## Claims

1. Parking lock (1) for fixating a transmission, in particular a transmission of a motor vehicle, comprising:
- a piston (70) for the mechanical locking of the transmission,
- an electromagnetic actuator (10) for fixating the piston (70) in a first position (A) which releases the transmission, having an energizable coil (25) arranged in a magnetic actuator housing (40), an anchor (20), which is movable when the coil (25) is energized and having an actuator plunger (22), which is mounted in the actuator housing (40) and which comprises an actuating element (52) for actuating a locking mechanism (50), by means of which the first position (A) of the piston (70) relative to the actuator housing (40) is fixated,
- a piston housing (60), in which the piston is movably arranged along a longitudinal axis (X-X), having a through opening (63) implemented coaxially to the longitudinal axis (X-X) which extends between a first side (61), which faces the electromagnetic actuator (10), and a second side (62),
- wherein the piston (70) encloses, together with the piston housing (60), a pressure chamber (65),
- wherein the piston housing (60) comprises at least one control opening (66), through which a medium can be introduced into the pressure chamber (65),
- wherein the piston housing (60) is closed on the side facing away from the actuator housing (40) by means of a cover (67) and the piston (70) comprises a spring shoe (78) on the side facing the cover (67), and
- wherein a compression spring (80) is supported in the piston house (40) in the longitudinal axis (X-X) at one end on the spring shoe (78),
**characterized in that**
- the compression spring (80) is supported in the piston house (40) in the longitudinal axis (X-X) at the other end on the cover (67) of the piston housing (60),
- the piston housing (60) is made of plastic and is connected to the actuator housing (40) at a connection point (5) by means of a metal-plastic connection,
- the electromagnetic actuator (10) is implemented to fixate the piston (70) in a second position (B) which locks the transmission,
- the second position (B) of the piston (70) relative to the actuator housing (40) is determined by the actuating element (52),
- the introduction of the medium into the pressure chamber (65) suits to push the piston (70) against the spring force of the compression spring (80) along the longitudinal axis (X-X) from the first position (A) into the second position (B),
- the piston (70) comprises a slide block (74) which is held guided and mounted on the actuator housing (40), and
- the slide block (74) is formed by a slide bush (75) inserted in the piston (70).

2. Parking lock (1) in accordance with claim 1,
**characterized in that**
the actuator housing (40) and the piston housing (60) are connected at the connection point (5) by means of an ultrasonic welding process.

3. Parking lock (1) in accordance with claim 1,
**characterized in that**
the piston housing (60) is molded onto the actuator housing (40) by means of an injection molding process in order to form the metal-plastic connection.

4. Parking lock (1) in accordance with any of the preceding claims,
**characterized in that**
the piston (70) is biased in the longitudinal axis (X-X) by the compression spring (80) in a first position (A), which releases the transmission, or in a second position (B), which locks the transmission.

5. Parking lock (1) in accordance with any of the preceding claims,
**characterized in that**
a parking lock plunger (85) is provided which is supported in the longitudinal axis (X-X) on the spring shoe (78) and which engages through the cover (67) of the piston housing (60).

6. Parking lock (1) in accordance with any of the preceding claims,
**characterized in that**
the locking mechanism (50) includes at least one cutout (54) in the actuator housing (40) and **in that** at least one locking member (58) is arranged in the cutout (54) which engages with the piston (70) in order to fixate the piston (70) in a first position (A) and in a second position (B).

7. Parking lock (1) in accordance with claim 6,
**characterized in that**
the at least one locking element (58) is a detent ball or a detent pin.

8. Parking lock (1) in accordance with claim 6 or 7,
**characterized in that**
the actuating element (52) includes an expansion cone (55) which is implemented to actuate the locking members (58).

9. Parking lock (1) in accordance with any of the preceding claims,
**characterized in that**
the actuating element (52) is implemented from an actuating sheath (53) which is placed onto the actuator plunger (22).

10. Parking lock (1) in accordance with any of the preceding claims,
**characterized in that**
the electromagnetic actuator (10) includes a pole cover (30) which extends in the longitudinal axis (X-X) on the side facing away from the piston (70) into the energizable coil (25) and which includes a sheath-shaped section (32) which is implemented as a control cone (34).

11. Parking lock (1) in accordance with any of the preceding claims,
**characterized in that**
the actuator plunger (22) is made of a non-magnetic material and extends through the pole cover (30) in the longitudinal axis (X-X).

12. Parking lock (1) in accordance with any of the preceding claims,
**characterized in that**
the piston housing (60) is manufactured in an injection molding process.

## Revendications

1. Frein de stationnement (1) pour bloquer une transmission, notamment une transmission de véhicule automobile comprenant :
- un piston (70) pour bloquer mécaniquement la transmission,
- un actionneur électromagnétique (10) pour bloquer le piston (70) dans une première position (A) libérant la transmission, avec une bobine (25) alimentée et installée dans un boîtier magnétique d'actionneur (40), un induit (20) déplacé par l'alimentation de la bobine (25) avec un poussoir d'actionneur (22) logé dans le boîtier d'actionneur (40) et un élément d'actionnement (52) pour actionner une installation de verrouillage (50) qui bloque la première position (A) du piston (70) par rapport au boîtier d'actionneur (40),
- un boîtier de piston (60) recevant le piston (70) en étant mobile selon un axe longitudinal (X-X), un orifice de passage (63) coaxial à l'axe longitudinal (X-X) qui est compris entre un premier côté (61) tourné vers l'actionneur électromagnétique (10) et un second côté (62),
- le piston (70) délimitant une chambre de pression (65) avec le boîtier de piston (60),
- le boîtier de piston (60) ayant au moins une ouverture de commande (66) pour introduire un milieu dans la chambre de pression (65),
- le boîtier de piston (60) étant fermé par un chapeau (67) sur le second côté (62) à l'opposé du boîtier d'actionneur (40),
- le piston (70) ayant un patin à ressort (78) sur le côté tourné vers le chapeau (67), et
- un ressort de compression (80) s'appuie dans le boîtier de piston (40) selon l'axe longitudinal (X-X) par une extrémité contre le patin à ressort (78),
dispositif **caractérisé en ce que**
- le ressort de compression (80) s'appuie selon l'axe longitudinal (X-X) dans le boîtier de piston (40) par une extrémité contre le chapeau (67) du boîtier de piston (60),
- le boîtier de piston (60) est réalisé en une matière plastique et il est relié à la jonction (5) avec le boîtier d'actionneur (40) par une liaison métal-matière plastique,
- l'actionneur électromagnétique (10) est réalisé pour bloquer le piston (70) dans une seconde position (B) bloquant la transmission,
- la seconde position (B) du piston (70) par rapport au boîtier d'actionneur (40) étant fixée par l'élément d'actionnement (52),
- l'introduction du milieu dans la chambre de pression (65) déplace le piston (70) contre la force développée par le ressort de compression (80) de la première position A à la seconde position B selon l'axe longitudinal X-X,
- le piston (70) a un coulisseau d'accrochage (74) tenu monté en guidage sur le boîtier d'actionneur (40), et
- le coulisseau d'accrochage (74) est un manchon de glissement (75) logé dans le piston (70).

2. Frein de stationnement (1) selon la revendication 1,
**caractérisé en ce que**
le boîtier d'actionneur (40) et le boîtier de piston (60) sont reliés à la jonction (5) par une soudure aux ultrasons.

3. Frein de stationnement (1) selon la revendication 1,
**caractérisé en ce que**
le boîtier de piston (60) est surmoulé par injection sur le boîtier d'actionneur (40) pour former la liaison métal-matière plastique.

4. Frein de stationnement (1) selon l'une des revendications précédentes,
**caractérisé en ce que**
le piston (70) est précontraint selon l'axe longitudinal (X-X) par le ressort de compression (80) dans une première position (A) libérant la transmission ou dans une seconde position (B) bloquant la transmission.

5. Frein de stationnement (1) selon l'une des revendications précédentes,
**caractérisé par**
un poussoir de frein de stationnement (85) qui s'appuie contre le patin à ressort (78) selon l'axe longitudinal (X-X) et traverse le chapeau (67) du boîtier de piston (60).

6. Frein de stationnement (1) selon l'une des revendications précédentes,
**caractérisé en ce que**
l'installation de verrouillage (50) comporte au moins un évidement (54) dans le boîtier d'actionneur (40), et
l'évidement (54) loge au moins un organe de verrouillage (58) qui vient dans le piston (70) pour bloquer le piston (70) dans une première position (A) et dans une seconde position (B).

7. Frein de stationnement (1) selon la revendication 6,
**caractérisé en ce que**
l'organe de verrouillage (58) est une bille d'accrochage ou une broche d'accrochage.

8. Frein de stationnement (1) selon la revendication 6 ou 7,
**caractérisé en ce que**
l'élément d'actionnement (52) comprend un cône écarteur (55) pour actionner les organes de verrouillage (58).

9. Frein de stationnement (1) selon l'une des revendications précédentes,
**caractérisé en ce que**
l'élément d'actionnement (52) est formé d'un manchon d'actionnement (53) rapporté sur le poussoir d'actionneur (22).

10. Frein de stationnement (1) selon l'une des revendications précédentes,
**caractérisé en ce que**
l'actionneur électromagnétique (10) comprend un chapeau de pôle (30) qui, sur le côté opposé au piston (70) selon l'axe longitudinal (X-X), vient dans la bobine (25) qui peut être alimentée et qui sur le côté tourné vers l'induit (20) a un segment (32) en forme de manchon réalisé comme cône de commande (34).

11. Frein de stationnement (1) selon l'une des revendications précédentes,
**caractérisé en ce que**
le poussoir d'actionneur (22) est réalisé en une matière non magnétique et il traverse le chapeau polaire (30) selon l'axe longitudinal (X-X).

12. Frein de stationnement (1) selon l'une des revendications précédentes,
**caractérisé en ce que**
le boîtier de piston (60) est réalisé par moulage par injection.
